# EUROPEAN PATENT APPLICATION

(11) **EP 4 016 480 A1**
(43) Date of publication of application: **22.06.2022**
(21) Application number: 21214931.4
(22) Date of filing: 15.12.2021
(51) Int. Cl.: G06V 40/16, G06V 10/778, G06F 3/04842, G06V 20/52

(54) **ACCESS CONTROL SYSTEM SCREEN CAPTURE FACIAL DETECTION AND RECOGNITION**

(30) Priority: 18.12.2020 US 202017127195
(71) Applicant: Sensormatic Electronics, LLC, Boca Raton, FL 33487 (US)
(72) Inventor: RICHARD, Brian, Boca Raton, FL 33487 (US); STOUT, Scott, Boca Raton, FL 33487 (US)
(74) Representative: Wright, Howard Hugh Burnby

(57) **Abstract**

An access control system (ACS) captures a screenshot of a portion of a computer display of the ACS, the portion displaying one or more images of an area of interest of the ACS. The ACS detects a face of a person in the captured screenshot. For at least one detected face, the ACS identifies one or more candidate identities based on recognizing the at least one detected face. The ACS then displays, on the computer display, each candidate identity.

## Description

### BACKGROUND

### Technical Field

The present disclosure relates generally to access control systems. Particular examples relate to using screen captures in facial detection and recognition.

### Introduction

Physical security and Access Control Systems (ACSs) are in general use in many public and private settings, for example, office buildings, airports, and sports arenas. ACSs use used to control entry to, and sometimes exit from, a controlled area.

Electronic ACSs are widely used and may include the implementation of electric lock doors, turnstiles, guards, and gates to keep an area controlled. For example, in a door entry system in an access-controlled building, authorized persons use credentials (e.g., physical, digital via a mobile device, or biometric) to make access requests at ACS readers. The ACS then takes some action based on the read credential to grant/allow access, for example, triggering door hardware/turnstile to unlock if authorized, or inhibiting an alarm.

### SUMMARY

The following presents a simplified summary of one or more aspects in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

Examples of the technology disclosed herein include methods, systems, and apparatuses of ACSs. In some examples, an ACS captures a screenshot of a portion of a computer display of the ACS, the portion displaying one or more images of an area of interest of the ACS. The ACS detects a face of a person in the captured screenshot. For at least one detected face, the ACS identifies one or more candidate identities based on recognizing the at least one detected face. The ACS then displays, on the computer display, each candidate identity.

In some examples, the portion is one of a window of the display, or a user selected area of the display. In some examples, detecting and identifying include transmitting the captured screenshot to one or more detecting and identifying computer process and receiving one or more candidate identities in response to the transmitting. In some examples, each candidate identity includes an image of the identified person other than the image of the captured screenshot. In such examples, displaying each candidate entity includes displaying the corresponding image of the identified person.

In some examples, the ACS receives user input confirming or denying a displayed candidate identity as corresponding to the person. In such examples, at least one of detecting and identifying includes machine learning based on the received user input.

In some examples, the ACS receives an access credential concurrent with the capturing and via an access credential reader corresponding to the area of interest. In such examples identifying further includes identifying the person associated with the access credential independent of performing facial detection, and displaying includes displaying a facial image associated in a database of the ACS with identified person independent of performing facial detection and recognition.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents

According to one aspect of the invention, a computer-readable medium stores instructions for access control by an access control system (ACS), executable by a processor to: capture a screenshot of a portion of a computer display of the ACS, the portion displaying one or more images of an area of interest of the ACS; detect a face of a person in the captured screenshot; for at least one detected face, identifying one or more candidate identities based on recognizing the at least one detected face; and display, on the computer display, each candidate identity and the screenshot. Preferably, the step of detecting and identifying comprises transmitting the captured screenshot to one or more detecting and identifying computer processes and receiving the one or more candidate identities in response to the transmitting. In one embodiment, each candidate identity comprises a corresponding stored image of the identified person other than the image of the captured screenshot, and displaying each candidate entity comprises displaying the corresponding stored image of the identified person. In an embodiment, instructions are further executable by the processor to receive user input confirming or denying a displayed candidate identity as corresponding to the person. In that embodiment, at least one of detecting and identifying optionally comprises machine learning based on user input; and the computer-readable medium stores further instructions executable by to processor to use the received user input as feedback to at least one of detecting and identifying. In a further embodiment, the computer-readable medium further comprises: concurrent with the capturing and via an access credential reader corresponding to the area of interest, receiving an access credential; and second identifying a facial image of the person associated with the access credential independent of performing facial detection and recognition; and wherein displaying includes displaying, independent of performing facial detection, i) the facial image of the person associated with the access credential, and ii) the captured image.

### BRIEF DESCRIPTION OF THE DRAWINGS

FIG. 1 is a block diagram depicting an example operating environment, in accordance with examples of the technology disclosed herein.
FIG. 2 is a block diagram of an exemplary architecture for a computer, in accordance with examples of the technology disclosed herein.
FIG. 3 is a flow chart of a method of access control, in accordance with examples of the technology disclosed herein.
FIG. 4 is a flow chart of a method of access control, in accordance with examples of the technology disclosed herein.
FIG. 5 is a flow chart of a method of access control, in accordance with examples of the technology disclosed herein.
FIG. 6 is an illustration of a computing device including components for performing the function of examples of the technology disclosed herein.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The present solution may be embodied in other specific forms without departing from its spirit or essential characteristics. The described embodiments are to be considered in all respects only as illustrative and not restrictive. The scope of the present solution is indicated by the appended claims rather than by this detailed description. All changes that come within the meaning and range of equivalency of the claims are to be embraced within their scope.

Reference throughout this specification to features, advantages, or similar language does not imply that all of the features and advantages that may be realized with the present solution should be or are in any single embodiment of the present solution. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages, and characteristics of the present solution may be combined in any suitable manner in one or more embodiments. One skilled in the relevant art will recognize, in light of the description herein, that the present solution can be practiced without one or more of the specific features or advantages of a particular embodiment. In other instances, additional features and advantages may be recognized in certain embodiments that may not be present in all embodiments of the present solution.

Reference throughout this specification to "one embodiment," "an embodiment," or similar language means that a particular feature, structure, or characteristic described in connection with the indicated embodiment is included in at least one embodiment of the present solution. Thus, the phrases "in one embodiment", "in an embodiment," and similar language throughout this specification may, but do not necessarily, all refer to the same embodiment.

As used in this document, the singular form "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to."

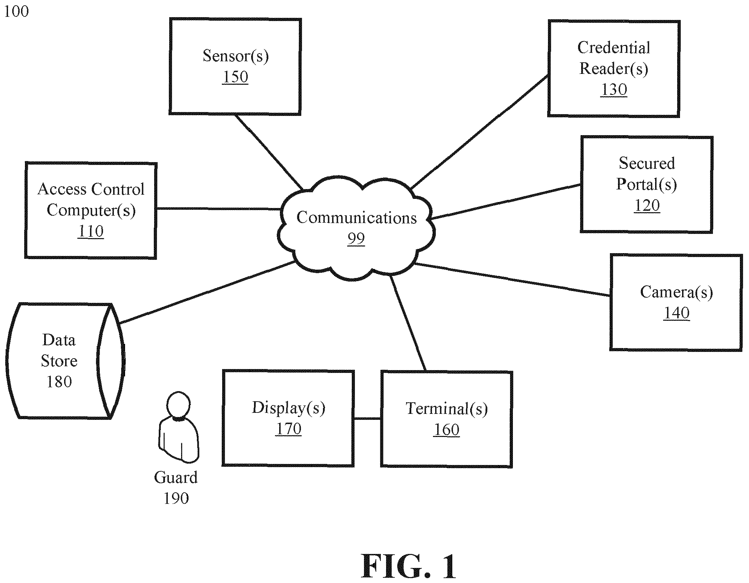

FIG. 1 is a block diagram depicting an example operating environment 100 in accordance with examples of the technology disclosed herein. While each element shown in the operating environment is represented by one instance of the element, multiple instances of each can be used. Further, while certain aspects of operation of the present technology are presented in examples related to FIG. 1 to facilitate enablement of the claimed invention, additional features of the present technology, also facilitating enablement of the claimed invention, are disclosed elsewhere herein.

As depicted in FIG. 1, the example operating environment 100 includes an access control computer 110, secured portal 120, credential reader 130, camera 140, sensors 150, a guard terminal 160, display 170, and data store 180. Each element of the operating environment may be configured to communicate with select other element(s) via communications network 99. In some examples, a user associated with a device may install an application and/or make a feature selection to obtain the benefits of the technology described herein.

Communications network 99 includes one or more wired or wireless telecommunications means by which the elements may exchange data. For example, the network 99 may include one or more of a local area network (LAN), a wide area network (WAN), an intranet, an Internet, a storage area network (SAN), a personal area network (PAN), a metropolitan area network (MAN), a wireless local area network (WLAN), a virtual private network (VPN), a cellular or other mobile communication network, a BLUETOOTH^{®} wireless technology connection, a near field communication (NFC) connection, a wired connection, any combination thereof, and any other appropriate architecture or system, that facilitates the communication of signals, data, and/or messages. A given communication path between two or more elements may not be shared by all the elements. Throughout the discussion of examples, it should be understood that the terms "data" and "information" are used interchangeably herein to refer to text, images, audio, video, or any other form of information that can exist in a computer-based environment.

Access control computer 110 may be in communication with each of sensor 150, credential reader 130, secured portal 120, camera 140, terminal 160, and data store 180. Access control computer 110 may be centralized or distributed. For example, some portions of access control computer 110 may be deployed adjacent to secured portals 120 and credential readers 130 (for example, for edge authentication), while other portions of access control computer 110 may be deployed on the facility site, but away from the secured portals. Further, some portions of access control computer 110 may be deployed off the controlled facility site.

Sensors 150 may include one or more of motion sensors, thermal sensors, infrared sensors, still cameras, video camera, vibration sensors, x-ray machine, metal detector, and the like. Sensors 150 may be deployed near to or remote from secured portals 120. Credential reader 130 may include one or more of a Radio Frequency Identification (RFID) badge scanner, a biometric reader (such as an iris scanner), a laser scanner (such as a bar code scanner, QR code scanner, or matrix code scanner), a card reader, number pad, and the like. The credential (not shown) may be a physical object (e.g. a card or RFID fob), an item of information (e.g., a number sequence entered into a number pad), a biometric characteristic (e.g., a fingerprint, an iris pattern), or even a combination of such items/information. The credential reader is typically deployed adjacent the secured portal 120. Secured portal 120 may be a turnstile, a door with electronically controlled strike lock of magnetic lock, a gate, or the like/combination. Camera 140 may include one or more of a video camera, a still camera, and a night vision camera. In some examples herein, the camera is deployed to cover the area of the credential reader 130 and the secure portal 120. Terminal 160 may be a conventional business/personal computer with one or more display(s) 170, or may be a simple keyboard and display 160 relying on the access control computer 110 for processing and data storage, or the like.

In typical operation, on presentation of an access credential at the credential reader 130, the credential reader 130 may transmit credential information to the access control computer 110. Access control computer 110 may determine whether the credential information indicates that access should be granted, for example, by comparing the credential information to an access control list maintained in data store 180. Upon determining that access should be granted, access control computer 110 releases secured portal 120 to allow access, for example, unlocking turnstile. One of access control computer 110 or terminal 160 (or both in combination) may display identity information from data store 180 associated with the credential on display 170 - in part to assist a guard 190 in monitoring access.

In some operations, video analytics, for example facial detection and facial recognition are performed by access control computer 110, or by a separate system accessible via network 99. For example, raw images (whether still or video, live or recorded) from camera 140 focused on the area of credential reader 130 and/or secured portal 120 are communicated to facial detection/recognition process. Typically, the communication link between the camera(s) 140 and the detection/recognition process requires dedicated feeds and custom configured equipment. Where performed by separate systems, detection/recognition may be offered as a service and charged per image or per stream over time. This approach typically requires special setup to configure the imaging devices and the communications equipment with the analytics server(s) of the facial detection and recognition systems. For example, Analytics Server A may support feeds from cameras #1, #2, and #3; Analytics Server B may support cameras #4, #5, and #6. The use of raw data with dedicated/custom feeds can be resource intensive during both installation and operation.

Examples of the technology disclosed herein can use snapshots from the ACS personnel workstation display 170 as the source for images fed to facial detection and facial recognition processes (whether local or remote), and for autonomous or guard-initiated action. In such examples, a portion of the display can be captured in separate images/frames. Candidate identities are automatically presented in the display, e.g., in a "People Recently Identified" window, and choices for action are presented. Such approached can more readily allow the use of cross-vendor resources. While the images captured by screenshot may not be as high-resolution as raw images from cameras, trials have demonstrated that the screenshots are sufficient to produce a set of one or more identities that are timely and useful to security personnel at the display.

Each element can include a communication module (not separately shown) capable of transmitting and receiving data over the network 99. For example, each of access control computer 110 and terminal 160 can include a server, a desktop computer, a laptop computer, a tablet computer, a television with one or more processors embedded therein and/or coupled thereto, a smart phone, a handheld computer, a personal digital assistant (PDA), or any other wired or wireless processor-driven device. In examples described herein, access control computer 110 and terminal 160 are computing resources that are individually or cooperatively operative to practice examples of the technology disclosed herein. In some examples, the terminal 160 is a consumer computing device such as a smart phone, a laptop computer, or a desktop computer. In some examples, access control computer 110 and terminal 160 provide data for display on display 170 of terminal 160.

The connections illustrated are examples, and other means of establishing a communications link between the computers and devices can be used. Moreover, those having ordinary skill in the art having the benefit of the present disclosure will appreciate that the computing devices illustrated in FIG. 1 may have any of several other suitable computer system configurations. For example, computing device 110 may be embodied as a system and may not include all the components described above.

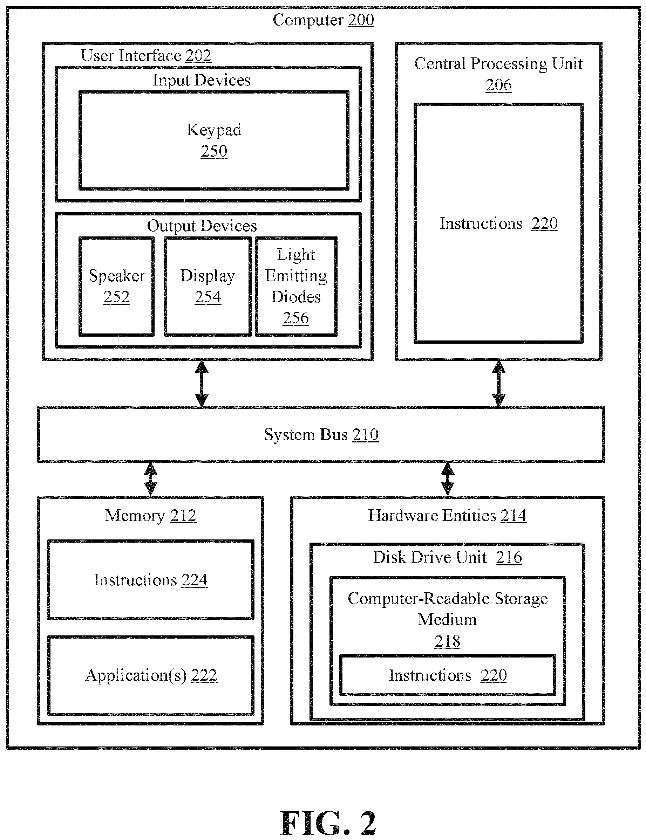

Referring now to FIG. 2, there is provided a block diagram of an exemplary architecture for a computer 200. Access control computer 110 and terminal 160 of FIG. 1 are the same as or substantially similar to computer 200. As such, the following discussion of computer 200 is sufficient for understanding access control computer 110 and terminal 160.

In examples, the computing devices, and any other computing machines associated with the technology presented herein, may be any type of computing machine such as, but not limited to, those discussed in more detail with respect to FIG. 2. Furthermore, any modules associated with any of these computing machines, such as modules described herein or any other modules (scripts, web content, software, firmware, or hardware) associated with the technology presented herein may be any of the modules discussed in more detail with respect to FIG. 2. The computing devices discussed herein may communicate with one another as well as other computer devices or communication systems over one or more networks, such as network 99. The network 99 may include any type of data or communications network, including any of the network technology discussed with respect to FIG. 20.

Notably, the computer 200 may include more or less components than those shown in FIG. 2. However, the components shown are sufficient to disclose an illustrative embodiment implementing the present solution. The hardware architecture of FIG. 2 represents one embodiment of a representative server configured to facilitate inventory counts, inventory management, and improved customer experiences.

Some or all the components of the computer 200 can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to, and/or programmed to perform one or more of the methodologies, procedures, or functions described herein.

As shown in FIG. 2, the computer 200 comprises a user interface 202, a CPU 206, a system bus 210, a memory 212 connected to and accessible by other portions of server 200 through system bus 210, and hardware entities 214 connected to system bus 210. The user interface can include input devices (e.g., a keypad 250) and output devices (e.g., speaker 252, a display 254 such as display 170, and/or light emitting diodes 256), which facilitate user-software interactions for controlling operations of the computer 200.

At least some of the hardware entities 214 perform actions involving access to and use of memory 212, which can be a RAM, a disk driver, and/or a Compact Disc Read Only Memory ("CD-ROM"). Hardware entities 214 can include a disk drive unit 216 comprising a computer-readable storage medium 218 on which is stored one or more sets of instructions 220 (e.g., software code) configured to implement one or more of the methodologies, procedures, or functions described herein. The instructions 220 can also reside, completely or at least partially, with-in the memory 212 and/or within the CPU 206 during execution thereof by the computer 200. The memory 212 and the CPU 206 also can constitute machine-readable media. The term "machine-readable media," as used here, refers to a single medium or multiple media (e.g., a centralized or distributed database, and/or associated caches and servers) that store the one or more sets of instructions 220. The term "machine-readable media," as used here, also refers to any medium that is capable of storing, encoding, or carrying a set of instructions 220 for execution by the computer 200 and that cause the computer 200 to perform any one or more of the methodologies of the present disclosure.

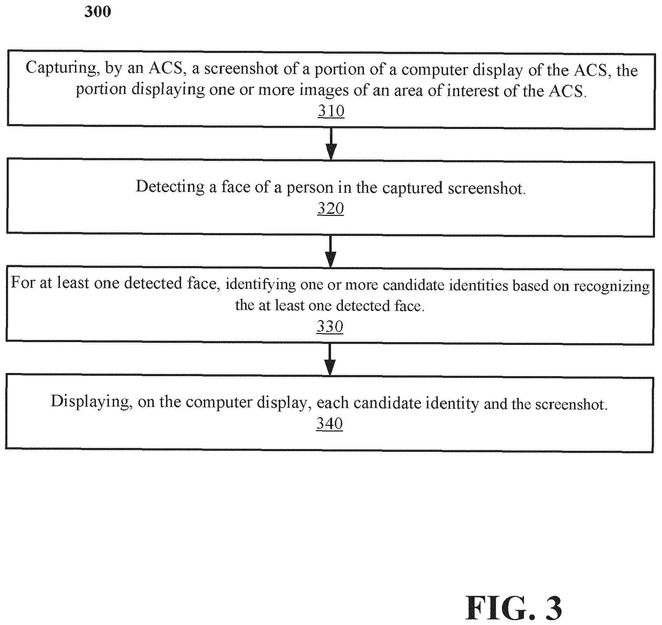

Referring to FIG. 3, and continuing to refer to prior figures for context, methods 300 for access control are shown. In such methods 300, an access control system (ACS) captures a screenshot of a portion of a computer display of the ACS, the portion displaying one or more images of an area of interest of the ACS - **Block 310.**

Consider, as a continuing example, an employee entering an office building lobby in which a secure portal 120, e.g., a turnstile, restricts access to an elevator bay. A credential reader 130, e.g., an RFID card reader, is deployed adjacent to the uncontrolled side of the turnstile 120. A camera 140 is capturing images of an area where the face of the person is expected to be visible when the person presents a credential to the credential reader 130. At least one image captured by the camera 140, concurrent with the presentation of the credential, is displayed in a window on a display 170 associated with a guard's terminal 160. The terminal 160 captures a screenshot of the portion of the display 170 that is displaying the image taken by the camera 140.

In other examples, the guard uses the terminal 160 and/or the display 170 to input a user selection of a portion of the display 170 containing a facial image. Such might be the case when the faces of two people are visible in the display 170. In some examples, the portion of the display 170 captured as a screenshot is the entire display 170. In some examples, the sources of the images presented on the display 170 are one or more of live video images, recorded video images, still images. In some examples, such as the continuing example, capturing the screenshot is an automatic process, for example, keyed by the presentation of a credential or the sensing of an event (such as by a motion sensor 150 positioned near the portal 120).

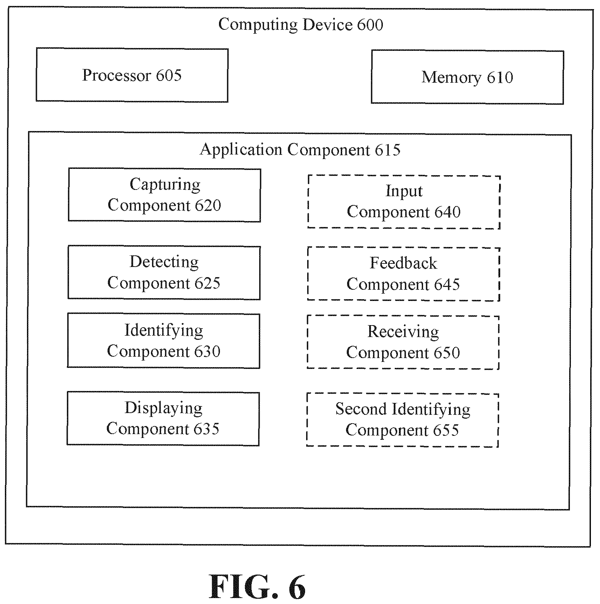

Referring to FIG. 6, and continuing to refer to prior figures for context, the ACS may perform the method 300 of access control, by such as via execution of application component 615 by processor 605 and/or memory 610 - wherein application component 615, processor 605, and/or memory 610 are components of computing device 600. Computing device 600 can be one or more of an access control computer 110, terminal 160, or a computer such as computer 200 - as appropriate as explained elsewhere herein. In a separate example, application component 615 includes capturing component 620 that is configured to or may comprise means for capturing a screenshot of a portion of a computer display of the ACS, the portion displaying one or more images of an area of interest of the ACS.

Returning to FIG. 3, the ACS detects a face of a person in the captured screenshot-Block **320.**

In the continuing example, the camera 140 took an image of the face of the person presenting the credential at the credential reader 130. The image was displayed on the display 170 and a screenshot of the image was captured. The captured screenshot was communicated to the access control computer 110. The access control computer 110 performs facial detection, a specific class of object detection, on the screenshot. In the continuing example, the facial detection approach used in the access control computer 110 is based on the genetic algorithm and the eigen-face approach. In such approaches, possible human eye regions are detected by testing valley regions in a gray-level version of the screenshot. Then the genetic algorithm is used to generate the possible face regions that include the eyebrows, the iris, the nostril, and the mouth corners. Each possible face candidate is normalized to reduce the lighting effect and any effect due to head movement. A fitness value of each candidate is measured based on its projection on the eigen-faces. After a number of iterations, face candidates with a high fitness value are selected for further processing. At this stage, the face symmetry is measured, and the existence of the different facial features is verified for each face candidate. In some examples, facial detection in the screenshots is performed by an external system as described below.

Referring again to FIG. 6, and continuing to refer to prior figures for context, in the separate example, application component 615 includes detecting component 625 that is configured to or may comprise means for detecting a face of a person in the captured screenshot.

Returning to FIG. 3, for at least one detected face, the ACS identifies one or more candidate identities based on recognizing the at least one detected face - **Block 330.**

In the continuing example, the access control computer 110 uses a typical face recognition approach. Starting with a detected face, the access control computer 110 aligns the detected face image to account for face pose, image size and properties such as illumination and grayscale. One purpose of the alignment process is to enable localization of facial features in a third step, facial feature extraction. Features such as eyes, nose and mouth are located/measured in the screenshot. A collection of facial features, e.g., a feature vector, is then matched against a database, e.g., data store 180, of faces maintained by the access control computer 110. For example, each identity associated with a credential in data store 180 includes a facial image of the identity holder. A perfect match is not necessary, and the access control computer 110 may return several candidate identities.

In some examples, identifying candidate identities prompts autonomous action of the ACS, such as disabling the ability of an access credential to grant access, grant access (such as lock/unlock a door), issuing a grace/temporary credential, notify on or more people (such as via e-mail), record each access attempt. In some employee access examples, if a former employee who is on a "watch list" attempts access, then entry is automatically denied, and authorities are alerted.

Referring again to FIG. 6, and continuing to refer to prior figures for context, in the separate example, application component 615 includes identifying component 630 that is configured to or may comprise means for identifying one or more candidate identities based on recognizing the at least one detected face.

In some examples, one or more of detecting and recognizing include transmitting the captured screenshot to one or more detecting and recognizing computer processes and receiving one or more candidate identities in response to the transmitting.

Returning to FIG. 3, for at least one detected face, the ACS displays, on the computer display, each candidate identity and the screenshot - **Block 340.**

In the continuing example, terminal 160 receives three (3) candidate identities (including the facial image of each candidate stored in data store 180) from the access control computer 110 and displays each candidate identity with corresponding facial image adjacent to the image corresponding to the screenshot. This facilitates a guard 190 in determining if the person presenting the credential corresponds to the credential. In some examples, display of each candidate identity can be accompanied by options for guard-initiated action, such as opening each candidate's ACS record, disabling the ability of an access credential to grant access, grant access (such as lock/unlock a door), issuing a grace/temporary credential, notify on or more people (such as via e-mail), record each access attempt. In some employee access examples, if a former employee who is on a "watch list" attempts access, then entry is automatically denied, and authorities are alerted.

Referring again to FIG. 6, and continuing to refer to prior figures for context, in the separate example, application component 615 includes displaying component 635 that is configured to or may comprise means for displaying, on the computer display, each candidate identity.

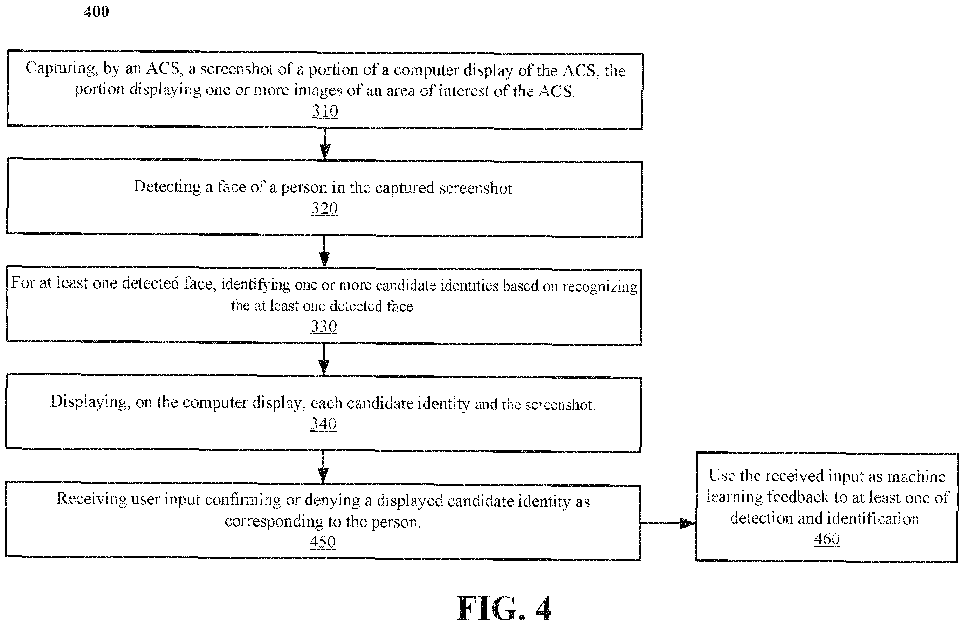

Referring to FIG. 4, and continuing to refer to prior figures for context, methods 400 for access control are shown. In such methods 400, Block 310 - Block 340 are performed as described above. In such methods 400 the ACS further receives user input confirming or denying a displayed candidate identity as corresponding to the person - **Block 450.**

In the continuing example, the guard indicates, via terminal 160, that the first facial image of three returned from the access control computer 110 and displayed on display 170 adjacent the portion of the display 170 used for the screenshot is a match with the screenshot. The guard also indicates that the second facial image and the third facial image of three returned from the access control computer 110 and displayed on display 170 adjacent the portion of the display 170 used for the screenshot are not matches for the screenshot.

Referring again to FIG. 6, and continuing to refer to prior figures for context, in the separate example, application component 615 includes input component 640 that is configured to or may comprise means for receiving user input confirming or denying a displayed candidate identity as corresponding to the person.

Returning to FIG. 4, at least one of detection and recognition is based on machine learning, and the ACS uses the received input as machine learning feedback to at least one of detection and identification - **Block 460.**

In the continuing example, both facial detection and the facial recognition use to identify matches for the captured screenshot are based on machine learning. In particular, the ACS uses supervised online machine learning. In supervised machine learning, the ACS is presented with a training set of example inputs and desired outputs. The machine learning process than "learns" one or more "rules" that map the inputs to the desired outputs through iterative optimization of an objective function. The "online" portion of "online machine learning" does not refer to the use of the Internet or the World Wide Web - in "online" machine learning data (in this case feedback from guards regarding which returned identity matches the screenshot image) becomes available in a sequential order and is used to update the best predictor for future data at each step. This approach is in contrast to batch learning that process an entire training set at one time.

Referring again to FIG. 6, and continuing to refer to prior figures for context, in the separate example, application component 615 includes feedback component 645 that is configured to or may comprise means for using the received input as machine learning feedback to at least one of detection and identification.

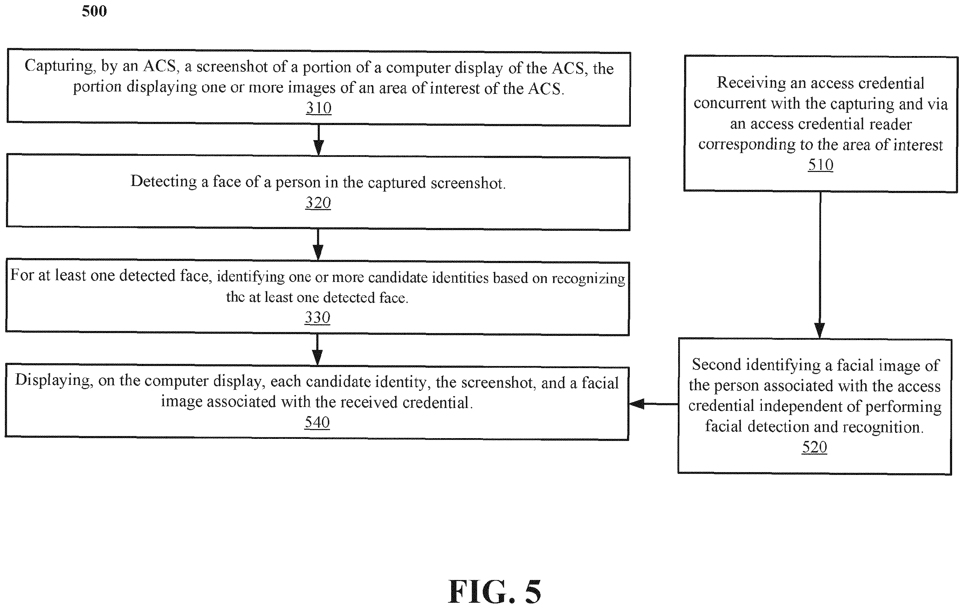

Referring to FIG. 5, and continuing to refer to prior figures for context, methods 500 for access control are shown. In such methods 500, Block 310 - Block 330 are performed as described above. In such methods 500, the ACS further receives an access credential concurrent with the capturing and via an access credential reader corresponding to the area of interest - **Block 510.** In the continuing example, and as noted above, at least one image was captured by the camera 140, concurrent with the presentation of the credential at credential reader 130.

Referring again to FIG. 6, and continuing to refer to prior figures for context, in the separate example, application component 615 includes receiving component 650 that is configured to or may comprise means for receiving an access credential concurrent with the capturing and via an access credential reader corresponding to the area of interest.

Returning to FIG. 5, the ACS second identifies a facial image of the person associated with the access credential independent of performing facial detection and recognition - **Block 520.**

In the continuing example, the access control computer 110 uses the credential information read by credential reader 130 to identify the person associated with the credential information among the identities stored in data store 180. This action is independent of the screenshot/image based actions of the ACS. Each identity stored in data store 180 includes a facial image of the person associated with the identity.

Referring again to FIG. 6, and continuing to refer to prior figures for context, in the separate example, application component 615 includes second identifying component 655 that is configured to or may comprise means for identifying a facial image of the person associated with the access credential independent of performing facial detection and recognition.

Returning to FIG. 5, in addition to displaying, on the computer display, each candidate identity and the screenshot, the ACS also displays a facial image associated with the received credential.- **Block 540.** In the continuing example, in addition to displaying the candidate identity determined through facial recognition (as explained above in conjunction with Block 340) the ACS also displays the facial image associated with the received credential. This approach can be useful in detecting when a legitimate credential is presented by someone other than the person to whom the credential was issued.

Referring again to FIG. 6, and continuing to refer to prior figures for context, in the separate example, application component 615 includes displaying component 635 that is configured to or may comprise means for displaying on the computer display, in addition to displaying each candidate identity and the screenshot, a facial image associated with the received credential.

In some examples, either upon the detection or display of candidate identities, the technology disclosed herein can take autonomous or guard-initiated actions within the ACS. Such actions include opening each candidate's ACS record, disabling the ability of an access credential to granting access, grant access (such as lock/unlock a door), issuing a grace/temporary credential, notifying on or more people (such as via e-mail), recording each access attempt. In some employee access examples, if a former employee who is on a "watch list" attempts access, then entry is automatically denied, and authorities are alerted. In some examples, the screenshot can be used as a source of biometric data (e.g., supplementing existing biometric data) for faces captured therein, triggering edge facial identification, receiving facial detection and/or facial recognition tuning.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims.

Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An access control method, comprising:
capturing, by an access control system (ACS), a screenshot of a portion of a computer display of the ACS, the portion displaying one or more images of an area of interest of the ACS;
detecting a face of a person in the captured screenshot;
for at least one detected face, identifying one or more candidate identities based on recognizing the at least one detected face; and
displaying, on the computer display, each candidate identity and the screenshot.

2. The method of claim 1, wherein the portion is one of a window of the display, or a user selected area of the display.

3. The method of claim 1 or 2, wherein detecting and identifying comprise transmitting the captured screenshot to one or more detecting and identifying computer processes and receiving the one or more candidate identities in response to the transmitting.

4. The method of any one of claims 1 to 3:
wherein each candidate identity comprises a corresponding stored image of the identified person other than the image of the captured screenshot, and
displaying each candidate entity comprises displaying the corresponding stored image of the identified person.

5. The method of any one of the preceding claims, further comprising:
receiving user input confirming or denying a displayed candidate identity as corresponding to the person.

6. The method of claim 5:
wherein at least one of detecting and identifying comprises machine learning based on user input; and
the method further comprises using the received user input as feedback to at least one of detecting and identifying.

7. The method of any one of the preceding claims:
further comprising:
concurrent with the capturing and via an access credential reader corresponding to the area of interest, receiving an access credential; and
second identifying a facial image of the person associated with the access credential independent of performing facial detection and recognition; and
wherein displaying includes displaying i) the facial image of the person associated with the access credential, and ii) the captured image.

8. An access control system (ACS), comprising:
a memory storing instructions; and
a processor in communication with the memory and configured to:
capture a screenshot of a portion of a computer display of the ACS, the portion displaying one or more images of an area of interest of the ACS;
detect a face of a person in the captured screenshot;
for at least one detected face, identifying one or more candidate identities based on recognizing the at least one detected face; and
display, on the computer display, each candidate identity and the screenshot.

9. The system of claim 8, wherein the portion is one of a window of the display, or a user selected area of the display.

10. The system of claim 8 or claim 9, wherein detecting and identifying comprise transmitting the captured screenshot to one or more detecting and identifying computer processes and receiving the one or more candidate identities in response to the transmitting.

11. The system of any one of claims 8 to 10:
wherein each candidate identity comprises a corresponding stored image of the identified person other than the image of the captured screenshot, and
displaying each candidate entity comprises displaying the corresponding stored image of the identified person.

12. The system of any one of claims 8 to 11, wherein the processor is further configured to receive user input confirming or denying a displayed candidate identity as corresponding to the person.

13. The system of claim 12,
wherein at least one of detecting and identifying comprises machine learning based on user input; and
the processor is further configured to use the received user input as feedback to at least one of detecting and identifying.

14. The system of any one of claims 8 to 13:
wherein the processor is further configured to;
receive an access credential concurrent with the capturing and via an access credential reader corresponding to the area of interest; and
second identify a facial image of the person associated with the access credential independent of performing facial detection and recognition; and
wherein displaying includes displaying i) the facial image of the person associated with the access credential, and ii) the captured image.

15. A computer-readable medium storing instructions for access control by an access control system (ACS), executable by a processor to perform the method of any one of claims 1-7.
